# EUROPEAN PATENT SPECIFICATION

(11) **EP 3 749 715 B1**
(45) Date of publication and mention of the grant of the patent: **27.04.2022**
(21) Application number: 19705797.9
(22) Date of filing: 07.02.2019
(51) Int. Cl.: C08L 77/02, B29C 41/06

(54) **POLYMER COMPOSITION FOR ROTATIONAL MOULDING**
POLYMERZUSAMMENSETZUNG ZUM ROTATIONSFORMEN
COMPOSITION POLYMÈRE POUR MOULAGE ROTATIF

(30) Priority: 08.02.2018 GB 201802076
(43) Date of publication of application: 16.12.2020
(73) Proprietor: Matrix Polymers Limited, Little Billing, Northampton NN3 9AG (GB)
(72) Inventor: QUARATINO, Aldo, Little Billing, Northampton NN3 9AG (GB)
(74) Representative: Haseltine Lake Kempner LLP
(86) International application number: PCT/GB2019/050330
(87) International publication number: WO 2019/155213

(56) References cited:
- EP-A1- 1 600 475
- EP-A1- 3 112 421
- WO-A1-96/17003
- WO-A1-2010/099155
- CN-A- 106 700 213
- DE-A1- 19 745 701
- US-A- 4 508 675
- US-A- 6 025 055
- US-A1- 2016 280 915

## Description

### TECHNICAL FIELD

The present invention relates to a polymer composition suitable for rotational moulding, to a process for making the polymer composition, to a process of manufacturing an article from the polymer composition by rotational moulding, and to a rotomoulded article formed from the polymer composition.

### BACKGROUND OF THE INVENTION

Rotational moulding (also known as rotomoulding) is a moulding process for producing articles from plastics materials. Rotational moulding is particularly suitable for large articles, because the moulds are generally cheaper than the moulds used for other sorts of plastic moulding such as injection moulding and blow moulding. Large hollow articles such as canoes, water tanks and waste bins are often made by rotational moulding.

Rotational moulding is generally based on four steps - loading (or charging), heating, cooling and unloading (or demoulding). Typically, a pre-weighed amount of material, generally in powder form, is placed in a mould located on an arm of a rotomoulding machine. The mould is then closed and the arm is moved into an oven for the heating step. During the heating phase the mould rotates bi-axially on perpendicular axes. The powder (or liquid) starts tumbling inside the mould while the temperature rises. Once the melting temperature is achieved the material sticks to the wall of the mould in a layer to form the moulded part. When the material is molten, generally after a determined period of time, the arm holding the mould is moved to a cooling station where forced air, water mist or a combination of both is used to cool the mould to a temperature below the solidification point of the material. During the heating process the temperature and time must be controlled so as to sufficiently melt and distribute the polymer material around the inside of the mould without degrading or deteriorating the properties of the polymer material. Finally, the arm is moved to an unloading station where the part can be removed from the mould. Loading and unloading operations are often called the service operation.

Rotational moulding is a unique plastic process and is different from other processes like injection moulding or blow moulding because of the absence of pressure. This lack of pressure means that moulds can be relatively light weight and inexpensive in construction, which lends the rotomoulding process to being economic to produce relatively small runs of products. For these reasons rotomoulding is used to manufacture a very wide and diverse range of hollow, often very complex and intricate shapes ranging in size from hockey balls to industrial tanks of over 50,000 litres capacity. Additionally, the absence of pressure and shear means that rotomoulded parts have low levels of moulded-in stress. The rotomoulding process also allows the production of multiple layer parts (composite structures) made using the same mould, at low cost.

A variety of materials have be used in the rotomoulding process. By far the most commonly used material in rotomoulding is polyolefins, especially polyethylene (PE), followed by polypropylene. Other materials used in rotomoulding include polyvinyl chloride (PVC), polycarbonate, polyamide and crosslinkable PEs. Polyethylene is a relatively inexpensive polymer which may be successfully used in rotomoulding processes under a wide range of conditions. However, polyethylene does not provide the required properties or characteristics necessary for all products or applications. For example, where a rotomoulded object is required to be stiffer, or to be compatible with, or resistant to, specific substances, it may be preferred to use alternative polymers such as crosslinkable polyethylene, polycarbonate, polyamide or crosslinkable PE. However, these polymers can be more expensive than polyethylene or polypropylene, in general. Thus there exists a need to provide polymer compositions for use in rotomoulding which can provide products having required physical properties at relatively low cost.

US 4 508 675 A describes a rotational moldable polyamide composition, a method of preparing the composition and a method of rotational molding. The composition contains from about 0.001 percent to about 0.5 percent by weight of a copper compound, preferably cuprous iodide. Preferably, the composition contains from about 0.001 percent to about 0.3 percent by weight of potassium iodide.

WO 96/17003 A1 describes films comprising PA-6 or PA-6,6 and a copolymer with polyamide blocks (6 or 6,6) and polytetramethyleneglycol blocks.

EP 3 112 421 A1 describes a polyamide resin composition for a molded article exposed to high pressure hydrogen containing a polyamide 6 resin (A) and a polyamide resin (B) having a melting point, as determined by DSC, that is not higher than a melting point of the polyamide 6 resin (A) + 20°C and a cooling crystallization temperature, as determined by DSC, that is higher than a cooling crystallization temperature of the polyamide 6 resin (A), the polyamide resin (B) being in an amount of 0.01 to 5 parts by weight based on 100 parts by weight of the polyamide 6 resin (A). US 6 025 055 A describes compositions comprising a matrix of an alloy of (a) polyamide and (b) polymer having polyamide blocks and polyether blocks, dispersed in which the matrix is a crosslinked phase (c), the said compositions having a melt strength of more than 1.5 and a flexural modulus at 23 °C (in accordance with ISO 178-93) of less than 700 MPa and preferably between 50 and 250 MPa.

DE 197 45 701 A1 describes a flexible, thermoplastic polyamide molding composition (I) comprises (A) 10-50 wt.% of a thermoplastic polyamide (B) 10-50 wt.% of a polyamide elastomer consisting of a block copolyetheramide, block copolyetherester amide or a blockcopolyetheresteretheramide (c) 5-30 wt.% of a functionalised olefin polymer prepared by solid phase graft polymerization of an alpha, beta -ethylenically unsaturated mono- and/or dicarboxylic acid and/or anhydride at 40 -100 °C (D) 5-40 wt.% of a non-functionalised soft thermoplastic polymer component having a flexural modulus of elasticity of no greater than 300 MPa and (E) 0-50 wt.% of a particulate filler having an average particle size of 0.05-100 microns. EP 1 600 475 A1 describes the use in rotomolding or slush molding applications of a composition comprising a polyolefin, a processing aid and optionally a UV-stabilizer.

CN 106 700 213 A describes a rotational molding product and a preparation method thereof and belongs to the technical field of rotational molding. The rotational molding product comprises linear low-density polyethylene substrate; a slipping and abrasion resisting layer is additionally arranged on the substrate; and the slipping and abrasion resisting layer is composed of linear low-density polyethylene, an inorganic abrasion-resisting agent, a macromolecular enhancing agent and an auxiliary agent.

US 2016/280915 A1 describes a composition including at least one polyamide; at least one copolymer including polyamide blocks and polyether blocks; and a single polyolefin, said polyolefin being a polyolefin functionalized by maleic anhydride units or by epoxy units.

WO 2010/099155 A1 describes an article formed by a rotational molding process, having at least one layer formed from a high molecular weight polyamide. The high molecular weight polyamide is one having a molecular weight in the range of 20,000 to 35,000 and also having an inherent viscosity of 1.05-1.60 dL/g.

Thus, there is an ongoing need for alternative or improved polymer compositions for rotational moulding, and an improved method of making such polymer compositions.

### SUMMARY OF THE INVENTION

According to a first aspect, there is provided a polymer composition for rotational moulding, the polymer composition comprising, based on the total weight of the polymer composition:
at least 50.0 wt. % of polyamide 6,
from 5.0 -4 0.0 wt. % of polyether block amide, and
from 0.25 to 5.0 wt. % of an additive package comprising one or more of (i) a light, heat and/or UV stabilizer, (ii) antioxidant, (iii) rotational moulding processing aid, and (iv) lubricant/mould release agent,
wherein the polymer composition has a Melt Mass Flow Rate of from 3.0 to 9.0 g/10 min @ 275°C with 2.16 kg as determined in accordance with ISO 1133, and
wherein the polymer composition has a moisture content measured in accordance with ISO 15512 of equal to or less than 0.20 wt. %.

Also disclosed is a polymer composition for rotational moulding, the polymer composition comprising, based on the total weight of the polymer composition:
at least about 95.0 wt. % of polyamide 6,
up to about 5.0 wt. % of an additive package comprising one or more of (i) a light, heat and/or UV stabilizer, (ii) antioxidant, (iii) rotational moulding processing aid, and (iv) lubricant/mould release agent,
optionally wherein the polymer composition does not comprise polyether block amide;
optionally wherein the polymer composition has a Melt Mass Flow Rate of from about 3.0 to about 9.0 g/10 min @ 275°C with 2.16 kg as determined in accordance with ISO 1133, and
optionally wherein the polymer composition has a moisture content measured in accordance with ISO 15512 of equal to or less than about 0.20 wt. %.

According to a second aspect, there is provided a process for producing a polymer composition for rotational moulding according to the first aspect comprising compounding polyamide 6, polyether block amide and the additive package in suitable amounts.

According to a third aspect, there is provided a process for making an article, the process comprising rotational moulding of a polymer composition according to the first aspect, wherein the atmosphere in the mould during rotational moulding is the ambient atmosphere or the process is conducted in the absence of an inert atmosphere.

Also disclosed is a rotomoulded article obtainable by the process according to the third aspect.

According to a fourth aspect, there is provided a polymer blend composition comprising the polymer composition according to the first aspect and a different polymer.

### BRIEF DESCRIPTION OF THE DRAWINGS

Fig. 1 summarizes the ARM Impact Strength for rotomouldable parts made and tested according to the Examples.
Fig. 2 summarizes the flexural modulus for rotomouldable parts made and tested according to the Examples.
Fig. 3 summarizes Shore (D) results for rotomouldable parts made and tested according to the Examples.
Fig. 4 summarizes the temperature dependent tensile modulus of rotomoulded parts made and tested according to the Examples.

### DETAILED DESCRIPTION OF THE INVENTION

### Polyamide 6

The polymer compositions according to certain aspects of the present invention comprise polyamide 6 (PA6), also known as nylon 6. PA6 may be synthesized by ring-opening polymerization of caprolactam. During polymerization, the amide bond within each caprolactam molecule is broken, with the active group on each side re-forming two new bonds as the monomer becomes part of the polymer backbone. Unlike nylon 6,6, in which the direction of the amide bond reverses at each bond, all PA6 amide bonds lie in the same direction, as depicted below:

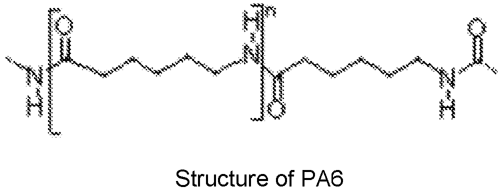

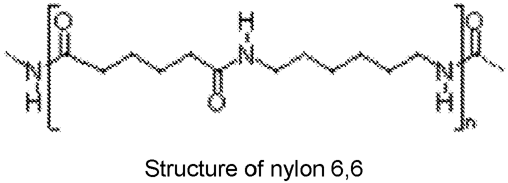

In certain embodiments, the PA6 has one or more of:
- a Melt Volume Flow Rate (MVFR) of from about 100 to 150 cm³/10 min with 5.0 kg at 275 °C, as determined in accordance with ISO 1133
- a melting temperature of from about 200 °C to about 250 °C, as determined in accordance with ISO 11357-1/-3 (10 °C/min)
- a density of from about 1000 kg/m³ to about 1250 kg/m³, as determined in accordance with ISO 1183

In certain embodiments, the PA6 has a MVFR of from about 100 to 150 cm³/10 min with 5.0 kg at 275 °C, a melting temperature of from about 200 °C to about 250 °C, and a density of from about 1000 kg/m³ to about 1250 kg/m³.

In certain embodiments, the PA6 has a MVFR of from about 110 to 140 cm³/10 min with 5.0 kg at 275 °C, a melting temperature of from about 210 °C to about 240 °C, and a density of from about 1050 kg/m³ to about 1150 kg/m³.

In certain embodiments, the PA6 has a MVFR of from about 115 to 125 cm³/10 min with 5.0 kg at 275 °C, a melting temperature of from about 215 °C to about 230 °C, and a density of from about 1100 kg/m³ to about 1150 kg/m³.

In certain embodiments, the PA6 has a MVFR of about 120 with 5.0 kg at 275 °C, a melting temperature of about 220 °C, and a density of about 1110 kg/m³.

An exemplary PA6 for use in the present invention is Tarnamid^{®} T-27 from Grupa Azoty S.A.

### Polyether block amide

In certain aspects, the polymer composition comprises polyether block amide.

Also disclosed is a polymer composition that does not contain polyether block amide, i.e., is free of polyether block amide.

Polyether block amide is a thermoplastic elastomer made of relatively flexible polyether and relatively rigid polyamide. The general chemical structure may be depicted as:

HO-(CO-PA-CO-O-PE-O)n-H

wherein PA = polyamide and PE = polyether.

In certain embodiments, the polyether block amide (PEBA) has one or more of:
- a Melt Mass Flow Rate (MMFR) of from about 3.0 to 10.0 g/10 min with 1.0 kg at 235 °C, as determined in accordance with ISO 1133
- a melting temperature of from about 130 °C to about 180 °C, as determined in accordance with ISO 11357-1/-3 (10 °C/min)
- a density of from about 1.0 g/cm³ to about 1.15 g/cm³, as determined in accordance with ISO 1183

In certain embodiments, the PEBA has a MMFR of from about 5.0 to 9.0 cm³/10 min with 1.0 kg at 235 °C, a melting temperature of from about 140 °C to about 170 °C, and a density of from about 1.0 g/cm³ to about 1.05 g/cm³.

In certain embodiments, the PEBA has a MMFR of from about 6.0 to 8.0 cm³/10 min with 1.0 kg at 235 °C, a melting temperature of from about 155 °C to about 165 °C, and a density of from about 1.0 g/cm³ to about 1.05 g/cm³.

In certain embodiments, the PEBA has a MMFR of from about 7.0 cm³/10 min with 1.0 kg at 235 °C, a melting temperature of from about 160 °C, and a density of about 1.01 g/cm³.

An exemplary PEBA for use in the present invention is Pebax^{®} 5544 from Arkema, S.A.

The PEBA, together with the additive package serve to modify, at least in part the rheology, of the PA6 and the polymer composition as a whole, enhancing its suitability for rotomoulding (e.g., by modifying the MMFR of the PA6 to a range which is suitable for rotomoulding) and/or to enhance the physical properties of the polymer compositions and articles made therefrom, such as improved impact properties, improved tensile properties, improved scratch resistance, to render it paintable and/or improved high temperature operating properties.

### Additive package

The additive package comprises components other than the PA6 and the PEBA. In certain aspects, the additive package comprises one or more of (i) a light, heat and/or UV stabilizer, (ii) antioxidant, (iii) rotational moulding processing aid, and (iv) lubricant/mould release agent.

### - Light, heat and/or UV stabilizer

The light, heat and/or UV stabilizer may be a hindered amine light stabilizer. In certain embodiments, the light, heat and/or UV stabilizer comprises or is a monomeric, hindered amine light stabilizer.

In certain embodiments, the hindered amine light stabilizer is a low molecular weight hindered amine light stabilizer, for example, having a relatively molecular weight ranging from about 200 to 500 g/mol.

In certain embodiments, the hindered amine light stabilizer is based on 2,2,6,6-tetramethyl-piperidine and derivatives thereof.

In certain embodiments, the hindered amine light stabilizer comprises or is N,N'-bis(2,2,6,6-tetramethyl-4-piperidyl)-N,N'-diformylhexamethylenediamine.

An exemplary light, heat and/or UV stabilizer is Uvinul^{®} 4050 FF, available from BASF.

Other light, heat and/or UV stabilizers include those based on benzophenone, for example, 2-hydroxy-benzophenones such as 3,3'-methylenebis(2-hydroxy-4-methoxybenzophenone); those based on benzotriazoles, for example, 2-(2'-hydroxyphenyl)benzotriazoles such as 2-(2'-hydroxy-5-methylphenyl)benzotriazole; those base on cyanoacrylates; and oligomeric hindered amine light stabilizer, such as Uvinul^{®} 5050 H and 5062 H.

### - Antioxidant

The antioxidant may be a primary antioxidant (i.e., a free-radical scavenger), such as a sterically hindered phenol, or a secondary antioxidant (i.e., a peroxide scavenger), such as an organophosphite, or a combination thereof.

In certain embodiments, the antioxidant comprises or is a mixture, e.g., a blend, of a sterically hindered phenol and an organophosphite.

On an individual basis, the sterically hindered phenol and the organophosphate may have a molecular weight ranging from about 500 to 800 g/mol, for example, from about 600 to about 700 g/mol, or form about 600 to 650 g/mol.

In certain embodiments, the antioxidant comprises or is a blend (e.g., a 1:1 blend) of N,N'-hexane-1,6-diylbis[3-(3,5-di-tert-butyl-4-hydroxyphenyl)propionamide and Tris(2,4-di-tert-butylphenyl)phosphite, for example, a blend of:

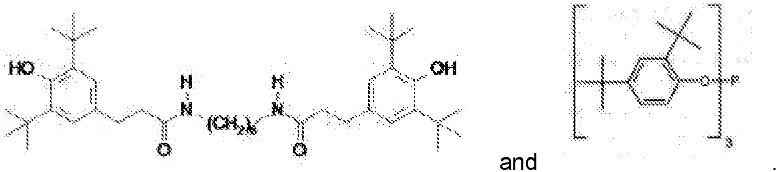

An exemplary antioxidant is Irganox^{®} B 1171, available from Ciba-Geigy.

Other antioxidants include monophenols unsubstituted or substituted by alkyl groups, such as 2,6-di-tert-butyl-4-methylphenol; hydroquinones unsubstituted or substituted by alkyl groups, such as 2,6-di-tert-butyl-4-methoxyphenol; hydroxyl-containing thiophenyl ethers such as 2,2'-thiobis(6-tert-butyl-4-methylphenol); bisphenols unsubstituted or substituted by alkyl groups, such as 2,2'-methylenebis(6-tert-butyl-4-methylphenol); and benzene compounds such as 1,3,5-tri(3,5-di-tert-butyl-4-hydroxybenzyl)-2,4,6-trimethylbenzene.

### - Rotational moulding processing aid

The rotational moulding processing aid is an additive which improves the processing properties of the polymer composition during rotational moulding. The rotational moulding processing aid may also serve to improve the mechanical properties in the finished article rotomoulded from the polymer composition.

In certain embodiments, the rotational moulding process aid comprises or is an impact modifier such as, for example, an elastomer or a plastomer. Addition of an impact modifier may serve to improve the impact resistance of an article formed from the polymer composition.

In certain embodiments, the rotational moulding process aid comprises or is a surface treated silicon dioxide. In certain embodiments, the surface treatment comprises a copolymer with acidic groups, adsorbed on the silicon dioxide.

An exemplary rotational moulding processing aid is BYK-P 4101, available from BKY-Chemie GmbH.

### - Lubricant/mould release agent

In certain embodiments, the lubricant/mould release agent is a metal salt of a fatty acid or fatty acids. The metal may be an alkaline earth metal, such as magnesium or calcium, or zinc. In advantageous embodiments, the metal is zinc.

In certain embodiments, the fatty acid is stearic acid or mixture of stearic acid (C-18) and palmitic acid (C-16).

In certain embodiments, the lubricant/mould release agent comprise or is zinc stearate, for example, in powder form. Although referred to as zinc strearate, i.e., the salt of stearic acid, this compound may comprise palmitic acid, which in the salt form is palmitate.

In certain embodiments, the additive package has the following composition:
an antioxidant which is a blend of a sterically hindered phenol and an organophosphite, such as N,N'-hexane-1,6-diylbis[3-(3,5-di-tert-butyl-4-hydroxyphenyl)propionamide and Tris(2,4-di-tert-butylphenyl)phosphite;
a light, heat and/or UV stabilizer which is a monomeric, hindered amine light stabilizer, such as N,N'-bis(2,2,6,6-tetramethyl-4-piperidyl)-N,N'-diformylhexamethylenediamine,
a rotational moulding processing aid which is a surface treated silicon dioxide, optionally wherein the surface treatment comprises a copolymer with acidic groups, and
a lubricant/mould release agent which is a zinc stearate.

In such embodiments, the additive package and, thus, the polymer composition may additionally comprise a carbon black, such as a polyethylene based carbon black. An exemplary carbon black is PE 48/92F, a black masterbatch, which uses a low density polyethylene (LDPE) carrier system for the carbon black, available from Colloids. The carbon black/LDPE may have a MMFR of about 5 g/10 min with 10 kg at 190 °C.

Although not to be regarded as part of the additive package as herein described, in certain embodiments, the polymer composition may additional comprise a colourant, for example, a pigment or dye. In certain embodiments, carbon black, when present, may additionally serve as colourant.

### Polymer composition

The additive package and PEBA are combined with the PA6 in suitable amounts to provide a polymer composition which is suitable for rotomoulding. The relative amounts of PA6, additive package and PEBA are selected such that the polymer composition has a Melt Mass Flow Rate (MMFR) of from 3.0 to 9.0 g/10 min with 2.16 kg at 275 °C. In certain embodiments, the polymer composition as a MMFR of from about 3.0 to about 8.0 g/10 min with 2.16 kg at 275 °C, for example, from about 4.0 to about 8.0 g/10 min with 2.16 kg at 275 °C, or from about 5.0 to about 7.0 g/10 min with 2.16 kg at 275 °C, or from about 3.0 to about 6.0 g/10 min with 2.16 kg at 275 °C, or from about 3.0 to about 5.0 g/10 min with 2.16 kg at 275 °C , or from about 4.0 to about 9.0 g/10 min with 2.16 kg at 275 °C, or from about 5.0 to about 8.0 g/10 min with 2.16 kg at 275 °C, of from about 6.0 to about 8.0 g/10 min with 2.16 kg at 275 °C, or from about 5.0 to about 7.0 g/10 min with 2.16 kg at 275 °C.

In advantageous embodiments, the moisture content of the polymer composition is very low. The moisture content of the polymer composition is equal to or less than 0.20 wt. %, as determined in accordance with ISO 15512. In certain embodiments, the moisture content of the polymer composition is equal to or less than about 0.18 wt. %, for example, equal to or less than about 0.16 wt. %, or equal to or less than about 0.14 wt. %, or equal to or less than about 0.12 wt. %, or equal to or less than about 0.10 wt. %, or equal to or less than about 0.09 wt. %, or equal to or less than about 0.08 wt. %, or equal to or less than about 0.07 wt. %, or equal to or less than about 0.06 wt. %, or equal to or less than about 0.05 wt. %.

According to the first aspect, the polymer composition comprises:
at least 50.0 wt. % of polyamide 6,
from 5.0-40.0 wt. % of polyether block amide, and
from 0.25 to 5.0 wt. % of an additive package comprising one or more of (i) a light, heat and/or UV stabilizer, (ii) antioxidant, (iii) rotational moulding processing aid, (iv) lubricant/mould release agent.

The polymer composition has a MMFR of from 3.0 to 9.0 g/10 min @ 275°C with 2.16 kg as determined in accordance with ISO 1133.

The polymer composition has a moisture content measured in accordance with ISO 15512 of equal to or less than 0.20 wt. %, for example, equal to or less than 0.10 wt. %.

In certain embodiments, the polymer composition comprises at least about 60.0 wt. % PA6, or at least about 70.0 wt. % PA6, or from about 70.0 wt. % to about 85.0 wt. % wt., or from about 75.0 wt. % to about 85.0 wt. %, or from about 78.0 wt. % to about 82.0 wt. %, or from about 79.0 wt. % to about 80.0 wt. %. In such embodiments, the polymer composition may comprise from about 10.0 wt. % to about 30.0 wt. % PEBA, for example, from about 15.0 wt. % to about 25 wt. % PEBA, or from about 18 wt. % to about 22 wt. % PEBA, or from about 19.0 wt. % to about 21 wt. % PEBA, or from about 19.5 wt. % to about 20.5 wt. % PEBA.

Also described is a polymer composition that comprises:
at least about 95.0 wt. % of polyamide 6,
up to about 5.0 wt. % of an additive package comprising one or more of (i) a light, heat and/or UV stabilizer, (ii) antioxidant, (iii) rotational moulding processing aid, and (iv) lubricant/mould release agent,
and does not comprise polyether block amide.

The polymer composition may have a MMFR of from about 3.0 to about 9.0 g/10 min @ 275°C with 2.16 kg as determined in accordance with ISO 1133.

The polymer composition may have a moisture content measured in accordance with ISO 15512 of equal to or less than about 0.20 wt. %, for example, equal to or less than about 0.19 wt. %, or equal to or less than about 0.18 wt. %, or equal to or less than about 0.17 wt. %, or equal to or less than about 0.16 wt. %, or equal to or less than about 0.15 wt. %. The moisture content may be at least about 0.10 wt. %, for example, at least about 0.12 wt. %, or at least about 0.15 wt. %.

The polymer composition may comprise at least about 96.0 wt. % PA6, for example, at least about 97.0 wt. % PA6, or at least about 98.0 wt. % PA6, or at least about 99.0 wt. % PA6. The polymer composition may comprise no greater than about 99.5 wt. % PA6, for example, no greater than about 99.4 wt. % PA, or no greater than about 99.3 wt. % PA6.

In the first aspect described immediately above, the polymer composition comprises 0.25 to 5 wt. % of the additive package, for example, from about 0.5 wt. % to about 2.5 wt. % of the additive package, or from about 0.5 wt. % to about 1.5 wt. % of the additive package, for from about 0.5 wt. % to about 1.0 wt. % of the additive package.

In such embodiments, the additive package may comprise, consist essentially of, or consist of, all of (i) a light, heat and/or UV stabilizer, (ii) antioxidant, (iii) rotational moulding processing aid, and (iv) lubricant/mould release agent. In such embodiment, the additive package the following composition:
an antioxidant which is a blend of a sterically hindered phenol and an organophosphite, such as N,N'-hexane-1,6-diylbis[3-(3,5-di-tert-butyl-4-hydroxyphenyl)propionamide and Tris(2,4-di-tert-butylphenyl)phosphite;
a light, heat and/or UV stabilizer which is a monomeric, hindered amine light stabilizer, such as N,N'-bis(2,2,6,6-tetramethyl-4-piperidyl)-N,N'-diformylhexamethylenediamine,
a rotational moulding processing aid which is a surface treated silicon dioxide, optionally wherein the surface treatment comprises a copolymer with acidic groups, and
a lubricant/mould release agent which is a zinc stearate.

In such embodiments, the additive package comprises, with amounts of each component based on the total weight of the polymer composition:
from about 0.25 wt. % to about 0.75 wt. % antioxidant, for example, a blend of a sterically hindered phenol and an organophosphite, such as N,N'-hexane-1,6-diylbis[3-(3,5-di-tert-butyl-4-hydroxyphenyl)propionamide and Tris(2,4-di-tert-butylphenyl)phosphite,
from about 0.05 wt. % to about 0.20 wt. % light, heat and/or UV stabilizer, for example, a monomeric, hindered amine light stabilizer, such as N,N'-bis(2,2,6,6-tetramethyl-4-piperidyl)-N,N'-diformylhexamethylenediamine,
from about 0.05 wt. % to about 0.25 wt. % rotational moulding process aid, for example, a surface treated silicon dioxide, optionally wherein the surface treatment comprises a copolymer with acidic groups, and
from about 0.02 wt. % to about 0.10 wt. % lubricant/mould release agent, for example, zinc stearate.

In such embodiments, the additive package comprises, with amounts of each component based on the total weight of the polymer composition:
from about 0.40 wt. % to about 0.60 wt. % antioxidant, for example, a blend of a sterically hindered phenol and an organophosphite, such as N,N'-hexane-1,6-diylbis[3-(3,5-di-tert-butyl-4-hydroxyphenyl)propionamide and Tris(2,4-di-tert-butylphenyl)phosphite,
from about 0.08 wt. % to about 0.12 wt. % light, heat and/or UV stabilizer, for example, a monomeric, hindered amine light stabilizer, such as N,N'-bis(2,2,6,6-tetramethyl-4-piperidyl)-N,N'-diformylhexamethylenediamine,
from about 0.10 wt. % to about 0.20 wt. % rotational moulding process aid, for example, a surface treated silicon dioxide, optionally wherein the surface treatment comprises a copolymer with acidic groups, and
from about 0.03 wt. % to about 0.07 wt. % lubricant/mould release agent, for example, zinc stearate.

In each of the embodiments described above, the polymer composition may comprise up to about 2 wt. % of a carbon black, such as a polyethylene based carbon black. As described above, an exemplary carbon black is PE 48/92F, a black masterbatch, which uses a low density polyethylene (LDPE) carrier system for the carbon black, available from Colloids. The carbon black/LDPE may have a MMFR of about 5 g/10 min with 10 kg at 190 °C. In certain embodiments, the polymer composition comprises up to about 1.5 wt. % of a carbon black, for example, from about 0.05 wt. % to about 1.25 wt.% , or from about 0.10 wt. % to about 1.25 wt. %, or from about 0.50 wt. % to about 1.25 wt. %, or from about from about 0.75 wt. % to about 1.25 wt. %, or from about 0.90 wt. % to about 1.10 wt. %, or up to about 1.0 wt. %, or about 1.0 wt. % of a carbon black

The polymer composition may be provided in pellet form.

In certain embodiments, the polymer composition is provided in powder form, for example, having an average particle size, d₅₀, of from about 100 µm to about 700 µm. In certain embodiments, the powder has an average particle size, dso, of from about 200 to 600 µm, for example, from about 250 µm to about 500 µm, or from about 250 µm to about 450 µm, or from about 250 µm to about 400 µm, or from about 275 µm to about 375 µm, or from about 300 µm to about 350 µm. In certain embodiments, the polymer composition is provided in powder form having an average particle size, dso, of from about 300 µm to about 350 µm. A powder having the requisite particle sized distribution may be obtained by classification using an appropriately sized screen, such as, for example, a Midwestern Industries, Inc. circular screen that allows varying micron sizes to be generated.

Processing of the polymer composition to produce it in pellet or powder form is described in greater detail below.

In other aspects, the polymer composition of the present invention may be blended with different polymers (i.e., other than polyamide 6) to obtain a polymer blend composition. The other polymers may be suitable for rotational moulding in their own right or when blended with the polymer composition of the present invention. Other polymers include polyethylene, polypropylene, ABS polymers, and polyamide other than PA6 such as, for example, PA12 or PA11.

The polymer composition may comprise additional non-polymeric components such as, for example, fillers, e.g., glass fibre or mineral based fillers such as mica.

### Process for making polymer composition

The polymer composition comprising PA6, PEBA and additive package may be made by compounding (i.e., melt blending) the components in suitable amounts. The compounding may be carried out in an extruder. Following extrusion, the polymer composition may be formed into pellets. Additionally or alternatively, the compounded composition may be subject to comminution to obtain a powder of the requisite particle size distribution.

In an advantageous embodiments, the compounded polymer composition is cryogenically comminuted in a pulverizing machine to obtain a powder having the requisite particle size and a moisture content of equal to or less than about 0.20 wt. % or, for example, equal to or less than about 0.10 wt. %, as required. In certain embodiments, the pulverising machine is a cryogenic mill, with one or more milling discs, and configured (e.g., with cooling points) to operate a temperatures ranging from 0 °C to -190 °C. Liquid nitrogen, for example, may be used to effect cooling. In certain embodiments, the temperature during cryogenic milling is lower than -100 °C. In certain embodiments, the temperature during cryogenic milling is from about -135 °C to -150 °C. In certain embodiments, the cryogenic mill is a single headed disc. Following milling, powder of the requisite particle size distribution may be obtained by classification using a screen of the appropriate size, for example, using, a Midwestern Industries, Inc. circular screen that allows varying micron sizes to be generated. Before or after classification, the powder may be subjected to a drying step, if and when required. The powder is conveyed through a drying unit, for example a con air s-type drying unit, that gently dries the powder utilising a temperature ranging from 0-100 °C. Following classification and optional drying the powder may be packaged in suitable means, e.g., aluminium foil bags which are heat sealed, to protect the powder from moisture absorption.

### Rotomoulding process

The process for making an article comprises rotational moulding of a polymer composition according to the present invention.

In certain embodiments, the process comprises at least the following steps:
(a) loading a mould with at least the polymer composition
(b) heating the mould loaded with the polymer composition while rotating the mould, for example, biaxially on perpendicular axes
(c) cooling the mould and/or the article obtained, and
(d) demoulding the article.

Advantageously, in certain embodiments, no special measures are required to adjust or control the atmosphere in the mould during the process, i.e., the atmosphere in the mould may be the ambient atmosphere or, put another way, not an inert gas atmosphere (i.e., in the absence of oxygen). Being able to rotomould under ambient conditions or without requiring an inert gas atmosphere is a significant advantage over conventional rotomoulding processes which employ, for example, dry ice to generate carbon dioxide in the mould, or a nitrogen purge.

Any suitable rotomoulding apparatus may be used. In a typical process, an amount of the polymer composition, which may be in powder form, as described above, is placed in the mould located on arm of the rotomoulding apparatus. The mould is then closed and moved into a heating means, such as an oven, for heating step (b). The mould is rotated during the heating step, for example, rotated bi-axially on perpendicular axes. The heated powder tumbles inside the mould as the temperature rises. The oven temperature during heating may vary from about 150 °C to about 400 °C, for example, from about 200 °C to about 400 °C, or from about 250 °C to about 350 °C, or from about 250 °C to about 300 °C, or from about 260 °C to about 280 °C, or about 270 to about 280 °C. In certain embodiments, the maximum heating temperature is above the melting point of the polymer composition, for example, about 5-20 °C higher, or about 5-10 C higher than the melting point of the polymer composition. In certain embodiments, the oven temperature is raised to between about 200 °C and 300 C and held during tumbling/rotation. In certain embodiments, the oven temperature is raised to and held from about 250 °C to about 300 °C.

The duration of the moulding process will vary depending on the size and scale of the article of manufacture. Typically, step (b) is carried out for up to about 1 hour, for example, from about 15 mins to about 45 mins, or from about 15 mins to about 30 mins, or from about 10 mins to about 20 mins, or from about 15 to about 20 mins, or from about 10 mins to about 20 mins. Likewise, duration of cooling will depend on variables such as the size of the article, configuration of the apparatus and temperature during the heating step. Cooling air and/or water may be used to cool the mould to room temperature, e.g., from about 20-25 °C over a suitable period of time.

Demoulding usually occurs before the mould has been cooled to ambient. Typically, the article is demoulded when it has a temperature of from about 50 °C to about 150 °C, for example, from about 75 °C to about 100 °C.

In a process in which a multi-layered article is manufacture, steps (a), (b) and (c) may be repeated, each repeat forming a subsequent layer, before (d). In such a process, the polymer composition may be varied for each cycled of steps (a), (b) and (c). In certain embodiments, at least one of the layers is formed from a polymer composition according to the present invention. In other embodiments, at least one of the layers is formed from a polymer composition according to the present invention and at least on other layer is formed from a rotomouldable polymer composition which is not in accordance with the present invention.

### Rotomoulded articles of manufacture

The articles that can be formed from the polymer composition by rotational moulding are many and various. In certain embodiments, the article is hollow, ranging in size, for example, from a hockey ball to an industrial tank having a capacity of at least 50,000 litres.

Articles that can be manufactured by rotational moulding include storage tanks, fuel tanks, diesel tanks, hot oil tanks, furniture, road signs and bollards, planters, pet houses, toys, bins and refuse containers, toy parts, such as doll parts, road cones, balls such as footballs and hockey balls, helmets, canoes, rowing boats, kayak hulls and playground equipment, such as slides. More specialised products include containers for the transportation of nuclear fissile materials, anti-piracy ship protectors, seals for inflatable oxygen masks and lightweight components for the aerospace industry.

In certain embodiments, the article is a multi-layered structure, for example, a multi-layered composite structure. In a multi-layered structure, the layers may be of the same or a different composition. Thickness of each layer may vary depending on the requirements of the structure. Typically, each layer will no more than about 20 mm in thickness, for example, from about 1 mm to about 15 mm, or from about 1 mm to about 10 mm, or from about 5 mm to about 10 mm, or from about 1 mm to about 5 mm. Layers may be laid down in a continuous rotomoulding process, for example, in which a first layer is formed in a first to rotomoulding cycle, but without demoulding, followed by second layer formed on the first layer during a second rotomoulding cycle, and so on. The requisite number of layers is formed and then the article is demoulded.

The rotomoulded articles obtained by the rotmoulding process according to the present invention, utilising the polymer composition according to the present invention, have advantageous physical properties.

In certain embodiments, rotomoulded articles obtained by the rotmoulding process according to the present invention, utilising the polymer composition according to the present invention, has one or more of the following properties:
(1) An ARM Impact Strength at 23 °C of at least about 60 J, for example, from about 60 J to about 100 J, or from about 70 J to about 90 J, or from about 75 J to about 85 J, or up to about 80 J, or about 80 J.
(2) An ARM Impact Strength at -40 °C of at least about 30 J, for example, from about 40 J to about 60 J, or from about 45 J to about 55 J, or up to about 50 J, or about 50 J.
   ARM (Association of Rotational Moulders) Impact Strength may be determined in accordance with the ARM Low Temperature Impact Test, Version 4.0, 2003, using a dart weight of 4.5 kg, and a 5 mm thick sample.
(3) A flexural modulus (i.e., stiffness) at 23 °C of at least about 1000 MPa, for example, at least about 1500 MPa, or at least about 2000 MPa, or from about 2000 MPa to about 2500 MPa, or from about 2000 MPa to about 2300 MPa, or from about 2200 MPa to about 2300 MPa.
   Flexural modulus may be determined in accordance with ISO 178 at 23 °C.
(4) A Shore (D) value - sometimes referred to as scratch resistance - of at least about 50, for example, from about 60 to about 100, or from about 80 to about 100, or form about 80 to about 90.
   Shore (D) value may be determined in accordance with ISO 868.
(5) A tensile modulus (stress at break) at 100 °C of at least about 15 MPa, a tensile modulus at 110 °C of at least about 15 MPa, and a tensile modulus at 120 °C of at least about 15 MPa, for example, a tensile modulus at each of 100 °C, 110 °C and 120 °C, of from about 15 MPa to about 20 MPa, for example, for example, at least about 16 MPa, or at least about 17 MPa.
   Tensile modulus (stress at break) may be determined in accordance with ISO 527 at temperatures ranging from 100 °C to about 120 °C.

In certain embodiments, the article of manufacture has:
(1) An ARM Impact Strength at 23 °C of from about 75 J to about 85 J,
(2) An ARM Impact Strength at -40 °C of from about 45 J to about 55 J,
(3) A flexural modulus (i.e., stiffness) at 23 °C of at least about 2000 MPa, for example, from about 2200 MPa to about 2300 MPa,
(4) A Shore (D) value of from about 80 to about 100, for example, form about 80 to about 90, and
(5) A tensile modulus at each of 100 °C, 110 °C and 120 °C of at least about 15 MPa, for example, at least about 16 MPa

### EXAMPLES

The following materials were used in the Examples
PA6 = Polyamide 6 having a MVFR of about 120 cm³/10 min with 5.0 kg at 275 °C, a melting temperature of about 220 °C, and a density of about 1110 kg/m³
PA12 = Polyamide 12 having a MVFR of about 57 cm³/10 min with 2.16 kg at 235 °C, a melting temperature of about 178 °C, and a density of about 1020 kg/m³
PP = Polypropylene based block copolymer having a density of about 903 kg/m³.
PEBA = Polyether block amide having a MMFR of about 7.0 cm³/10 min with 1.0 kg at 235 °C, a melting temperature of about 160 °C, and a density of about 1.01 g/cm³
CB = carbon black/LDPE may ing MMFR of about 5 g/10 min with 10 kg at 190 °C
Antioxidant 1 (AO1) = a 1:1 blend) of N,N'-hexane-1,6-diylbis[3-(3,5-di-tert-butyl-4-hydroxyphenyl)propionamide and Tris(2,4-di-tert-butylphenyl)phosphite Antioxidant 2 (AO2) = a tris(2,4-di-tert.-butylphenyl)phosphite
Anitoxidant 3 (AO3) = pentaerythritol tetrakis(3-(3,5-di-tert-butyl-4-hydroxyphenyl) propionate)
Hindered amine light stabilizer 1 (HALS1) = N,N'-bis(2,2,6,6-tetramethyl-4-piperidyl)-N,N'-diformylhexamethylenediamine
Hindered amine light stabilizer 2 (HALS2) = mixture of: poly[[6-[(1,1,3,3-tetramethylbutyl)amino]-1,3,5- triazine-2,4-diyl][(2,2,6,6-tetramethyl-4-piperidinyl)imino]-1,6- hexanediyl[(2,2,6,6-tetramethyl-4-piperidinyl)imino]]); and butanedioic acid, dimethylester, polymer with 4- hydroxy-2,2,6,6-tetramethyl-1-piperidine ethanol
Rotational moulding processing aid (RMPA = surface treated silicon dioxide (surface treatment comprises a copolymer with acidic groups, adsorbed on the silicon dioxide)
Lubricant/mould release agent (MRA) = zinc stearate powder

### Example 1

As summarized in Table 1, PA6 based polymer resin compositions were prepared by compounding followed by cryogenic grinding to obtain powders having the specified moisture content.

| | PA6 (wt. %) | PEBA (wt. %) | CB (wt. %) | AO1 (wt. %) | HALS1 (wt. %) | RMPA (wt. %) | MRA (wt. %) | Moisture content (%) |
|---|---|---|---|---|---|---|---|---|
| Composition 1 | 78.21 | 20.0 | 1.0 | 0.5 | 0.1 | 0.15 | 0.04 | 0.1 |
| Composition 2 | 78. | 20.0 | 1.0 | 0.5 | 0.1 | 0.15 | 0.02 | 0.2 |
| Reference Composition 3 | 98.21 | 0 | 1.0 | 0.5 | 0.1 | 0.15 | 0.04 | 0.2 |

A comparative composition, Comparative Composition A, was prepared in the same manner, having the following composition:
PP = 99.62 wt. %
AO3 = 0.07 wt. %
AO2 =.1 wt. %
HALS2 = 0.21 wt. %

Also obtained was a rotomouldable general purpose polyethylene (PE) having a density of 0.935 g/cm³ and a MFR of 6.5 g/10 min. 100 % of this PE was used as Comparative Composition B. The PE composition was not cryogenically ground.

PA12 was used (100 %) to prepare a Comparative Composition C.

### Example 2

Compositions 1, 2, A, B and C were rotomoulded to obtain rotomouldable parts, which were tested as described in accordance with Example 3. Oven temperature was 275 °C, held for 12-17 minutes, with an air atmosphere in the mould.

### Example 3

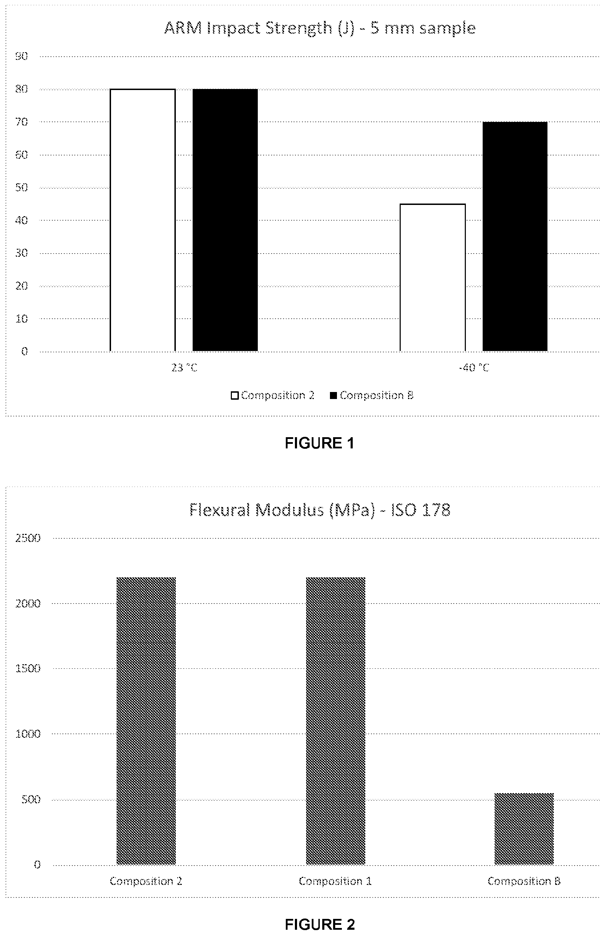

ARM Impact Strength (Falling dart impact testing (per the ARM guidelines described above) was carried out for Composition 2 and Comparative Composition B Each sample was 5mm thick. Results are summarized in Fig. 1. Prior to testing the specimens were conditioned in a freezer at -40 °C and in a controlled temperature room at 23 °C for 24 hours before being impacted.

The flexural modulus of parts made from Composition 1, Composition 2 and Comparative Composition B were tested in accordance with ISO 178, as described above. Results are summarized in Fig. 2. The results show that the PA6 based compositions produce relatively stiff rotomoulded parts, with over four times the flexural modulus value of a general purpose rotomouldable polyethylene. This means that the wall thickness of a part could be reduced (i.e., using less material overall) whilst maintaining excellent stiffness.

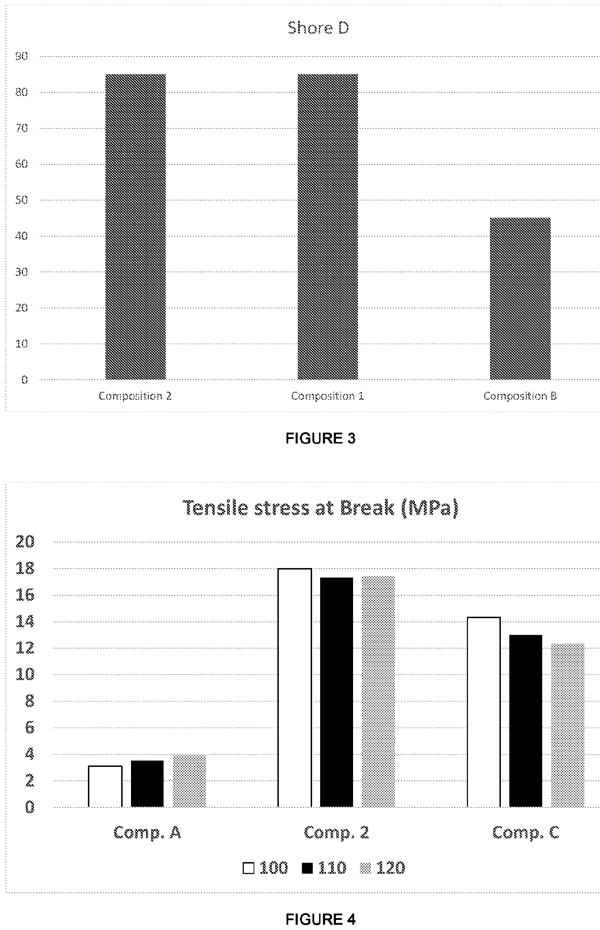

Shore (D) results for parts made from Composition 1, Composition 2 and Comparative Composition B are summarized in Fig. 3. This demonstrates that the PA6 based compositions have excellent scratch resistance compared to a general purpose rotomouldable polyethylene.

The temperature dependent tensile modulus of rotomoulded parts made from Composition 2, Comparative Composition A and Comparative Composition C were compared. Results are summarised in Fig. 4. The physical properties of polymers are affected by temperature. At elevated temperature, they tend to soften and lose strength and rigidity. Therefore, it is important to assess how a material behaves in high temperature conditions. Fig. 4 shows the PA6 based compositions retain good rigidity at elevated temperatures.

## Claims

1. A polymer composition for rotational moulding, the polymer composition comprising, based on the total weight of the polymer composition:
at least 50.0 wt. % of polyamide 6,
from 5.0 - 4 0.0 wt. % of polyether block amide, and
from 0.25 to 5.0 wt. % of an additive package comprising one or more of (i) a light, heat and/or UV stabilizer, (ii) antioxidant, (iii) rotational moulding processing aid, and (iv) lubricant/mould release agent,
wherein the polymer composition has a Melt Mass Flow Rate of from 3.0 to 9.0 g/10 min @ 275°C with 2.16 kg as determined in accordance with ISO 1133, and
wherein the polymer composition has a moisture content measured in accordance with ISO 15512 of equal to or less than 0.20 wt. %.

2. The polymer composition according to claim 1, wherein: (i) the polymer composition comprises at least about 70 wt. % of polyamide 6, for example, from 70 wt. % 99.5 wt. % polyamide 6; or (ii) the polymer composition comprises from about 75 wt. % to about 85 wt. % polyamide 6 and/or from about 15 wt. % to about 25 wt. % polyether block amide.

3. The polymer composition according to any preceding claim, wherein the polymer composition has a moisture content of equal to or less than 0.10 %.

4. The polymer composition according to any one of claims 1-3, wherein the polymer composition comprises from 0.50 wt. % to 2.0 wt. % of the additive package, or from 0.50 wt. % to 1.0 wt. % of the additive package.

5. The polymer composition according to any preceding claim, wherein the polyamide 6 has an Melt Volume Flow Rate of 100 to 150 cm³/10 min with 5.0 kg at 275 °C in accordance with ISO 1133, a melting temperature of from 200 to 250 °C as determined in accordance with ISO 11357-1/-3 (10°C/min), and a density of from 1000 to 1250 kg/m³ as determined in accordance with ISO 1183.

6. The polymer composition according to any preceding claim, wherein the polyether block amide has a melting temperature of from 140 °C to 180 °C as determined in accordance with ISO 11357-1/-3 (10°C/min), and a density of from 950 to 1050 kg/m³ as determined in accordance with ISO 1183.

7. The polymer composition according to any preceding claim , wherein the additive package comprises, consists essentially of, or consists of, based on the total weight of the polymer composition: from 0.1 wt. % to 1.0 wt. % of antioxidant, from 0.01 wt. % to 0.25 wt. % of light, heat and/or UV stabilizer, from 0.01 wt. % to 0.25 wt. % of rotational moulding processing aid, and up to 0.1 wt. % lubricant/mould release agent.

8. The polymer composition according to any preceding claim, wherein: (i) the antioxidant comprises or is a sterically hindered phenol, optionally in combination with a hydrocarbyl phosphite; and/or (ii) the light, heat and/or UV stabilizer comprises or is a hindered amine light stabilizer, for example, a monomeric amine light stabilizer, such as N,N'-bis(2,2,6,6-tetramethyl-4-piperidyl)-N,N'-diformylhexamethylenediamine; and/or (iii) the rotational moulding processing aid comprises or is a surface treated silicon dioxide, optionally wherein the surface treatment comprises a copolymer with acidic groups; and/or (iv) the lubricant/mould release agent comprises or is a stearate, for example, zinc stearate.

9. The polymer composition according to any preceding claim, wherein the polymer composition additionally comprises carbon black, for example, a polyethylene based carbon black.

10. The polymer composition according to any preceding claim, wherein: (i) the polymer composition is in pellet form; or (ii) the polymer composition is in powder form, optionally wherein the powder has an average particle size, d₅₀ of from 100 µm to 700 µm.

11. A process for producing a polymer composition for rotational moulding according to any one of claims 1-10 comprising compounding polyamide 6, polyether block amide and the additive package in suitable amounts.

12. The process according to claim 11, further comprising cryogenic communition of the polymer composition, for example, in a pulverizing machine, to obtain a powder having a moisture content of equal to or less than 0.20 %, optionally, less than 0.15 %, or equal to or less than 0.10 %, further optionally wherein the powder following communition has an average particle size, dso, of from 100 to 700 µm.

13. A process for making an article, the process comprising rotational moulding of a polymer composition according to any one of claims 1 to 10, wherein the atmosphere in the mould during rotational moulding is the ambient atmosphere or the process is conducted in the absence of an inert atmosphere.

14. The process of claim 13, comprising at least the following steps:
(a) loading a mould with at least the polymer composition according to any one of claims 1 to 10
(b) heating the mould loaded with the polymer composition while rotating the mould, for example, biaxially on perpendicular axes
(c) cooling the mould and/or the article obtained, and
(d) demoulding the article.

15. A polymer blend composition comprising the polymer composition according to any one of claims 1-10 and a different polymer.

## Patentansprüche

1. Polymerzusammensetzung für Rotationsformen, die Polymerzusammensetzung umfassend, bezogen auf das Gesamtgewicht der Polymerzusammensetzung:
mindestens 50,0 Gewichtsprozent von Polyamid 6, von 5,0 bis 40,0 Gewichtsprozent Polyetherblockamid und von 0,25 bis 5,0 Gewichtsprozent eines Additivpakets, umfassend eines oder mehrere von (i) einem Licht-, Wärme- und/oder UV-Stabilisator, (ii) einem Antioxidationsmittel, (iii) einem Rotationsformen-Verarbeitungshilfsmittel und (iv) einem Gleitmittel/Formtrennmittel,
wobei die Polymerzusammensetzung eine Schmelzmassen-Fließrate von 3,0 bis 9,0 g /10 Min. bei 2750 °C mit 2,16 kg, bestimmt gemäß ISO 1133, aufweist und wobei die Polymerzusammensetzung einen gemäß ISO 15512 gemessenen Feuchtigkeitsgehalt von gleich oder weniger als 0,20 Gewichtsprozent aufweist.

2. Polymerzusammensetzung gemäß Anspruch 1, wobei: (i) die Polymerzusammensetzung mindestens etwa 70 Gewichtsprozent von Polyamid 6, beispielsweise von 70 Gewichtsprozent bis 99,5 Gewichtsprozent von Polyamid 6, umfasst; oder (ii) die Polymerzusammensetzung von etwa 75 Gewichtsprozent bis etwa 85 Gewichtsprozent von Polyamid 6 und/oder von etwa 15 Gewichtsprozent bis etwa 25 Gewichtsprozent Polyetherblockamid umfasst.

3. Polymerzusammensetzung gemäß einem der vorherigen Ansprüche, wobei die Polymerzusammensetzung einen Feuchtigkeitsgehalt von gleich wie oder weniger als 0,10 % aufweist.

4. Polymerzusammensetzung gemäß einem der Ansprüche 1 bis 3, wobei die Polymerzusammensetzung von 0,50 Gewichtsprozent bis 2,0 Gewichtsprozent des Additivpakets oder von 0,50 Gewichtsprozent bis 1,0 Gewichtsprozent des Additivpakets umfasst.

5. Polymerzusammensetzung gemäß einem der vorherigen Ansprüche, wobei das Polyamid 6 eine Schmelzvolumen-Fließrate von 100 bis 150 cm³/10 Min. mit 5,0 kg bei 275 °C gemäß ISO 1133, eine Schmelztemperatur von 200 bis 250 °C, bestimmt gemäß ISO 11357-1/-3 (100 C/Min.), und eine Dichte von 1000 bis 1250 kg/m³, bestimmt gemäß ISO 1183, aufweist.

6. Polymerzusammensetzung gemäß einem der vorherigen Ansprüche, wobei das Polyetherblockamid eine Schmelztemperatur von 140 °C bis 180 °C, bestimmt nach ISO 11357-1/-3 (10 °C/Min.), und eine Dichte von 950 bis 1050 kg/m 3, bestimmt nach ISO 1183, aufweist.

7. Polymerzusammensetzung gemäß einem der vorherigen Ansprüche, wobei das Additivpaket, bezogen auf das Gesamtgewicht der Polymerzusammensetzung, Folgendes umfasst, im Wesentlichen daraus besteht oder daraus besteht: von 0,1 Gewichtsprozent bis 1,0 Gewichtsprozent Antioxidationsmittel, von 0,01 Gewichtsprozent bis 0,25 Gewichtsprozent Licht-, Wärme- und/oder UV-Stabilisator, von 0,01 Gewichtsprozent bis 0,25 Gewichtsprozent Rotationsformen-Verarbeitungshilfsmittel und bis zu 0,1 Gewichtsprozent Gleitmittel/Formtrennmittel.

8. Polymerzusammensetzung gemäß einem der vorherigen Ansprüche, wobei: (i) das Antioxidationsmittel ein sterisch gehindertes Phenol, optional in Kombination mit einem Hydrocarbylphosphit, umfasst oder ein solches ist; und/oder (ii) der Licht-, Wärme- und/oder UV-Stabilisator einen gehinderten Amin-Lichtstabilisator, beispielsweise einen monomeren Amin-Lichtstabilisator, wie z. B. N,N'-bis(2,2,6,6-Tetramethyl-4piperidyl)-N,N'-diformylhexamethylendiamin, umfasst oder ein solcher ist; und/oder (iii) das Rotationsformen-Verarbeitungshilfsmittel ein oberflächenbehandeltes Siliciumdioxid umfasst oder ein solches ist, wobei die Oberflächenbehandlung optional ein Copolymer mit sauren Gruppen umfasst; und/oder (iv) das Gleitmittel/Formtrennmittel ein Stearat, beispielsweise Zinkstearat, umfasst oder ein solches ist.

9. Polymerzusammensetzung gemäß einem der vorherigen Ansprüche, wobei die Polymerzusammensetzung zusätzlich Ruß umfasst, beispielsweise einen Ruß auf Polyethylenbasis.

10. Polymerzusammensetzung gemäß einem der vorherigen Ansprüche, wobei: (i) die Polymerzusammensetzung in Pelletform ist; oder (ii) die Polymerzusammensetzung in Pulverform ist, wobei das Pulver optional eine durchschnittliche Teilchengröße d50 von 100 pm bis 700 pm aufweist.

11. Verfahren zum Herstellen einer Polymerzusammensetzung für Rotationsformen gemäß einem der Ansprüche 1-10, umfassend ein Zubereiten von Polyamid 6, Polyetherblockamid und dem Additivpaket in geeigneten Mengen.

12. Verfahren gemäß Anspruch 1 1, ferner umfassend ein kryogenes Zerkleinern der Polymerzusammensetzung, beispielsweise in einer Pulverisierungsmaschine, um ein Pulver mit einem Feuchtigkeitsgehalt von gleich wie oder weniger als 0,20 %, optional weniger als 0,15 % oder gleich wie oder weniger als 0,10 % zu erlangen, ferner optional wobei das Pulver nach Zerkleinern eine durchschnittliche Teilchengröße d50 von 100 bis 700 pm aufweist.

13. Verfahren zum Herstellen eines Gegenstands, das Verfahren umfassend Rotationsformen einer Polymerzusammensetzung gemäß einem der Ansprüche 1 bis 10, wobei die Atmosphäre in der Form während des Rotationsformens die Umgebungsatmosphäre ist oder das Verfahren in Abwesenheit einer inerten Atmosphäre durchgeführt wird.

14. Verfahren gemäß Anspruch 13, umfassend mindestens die folgenden Schritte:
(a) Beladen einer Form mit mindestens der Polymerzusammensetzung gemäß einem der Ansprüche 1 bis 10
(b) Erhitzen der mit der Polymerzusammensetzung gefüllten Form unter Drehen der Form, z. B. biaxial auf senkrechten Achsen
(c) Abkühlen der Form und/oder des erlangten Gegenstands, und
(d) Entformen des Gegenstands.

15. Polymermischungszusammensetzung, umfassend die Polymerzusammensetzung gemäß einem der Ansprüche 1-10 und ein unterschiedliches Polymer.

## Revendications

1. Une composition polymère pour le rotomoulage, la composition polymère comprenant, sur la base du poids total de la composition polymère :
au moins 50,0 % en poids de polyamide 6,
de 5,0 à 40,0 % en poids de polyéther bloc amide, et de 0,25 à 5,0 % en poids d'un ensemble d'additifs comprenant un ou plusieurs parmi (i) un photostabilisant, un stabilisant thermique et/ou UV, (ii) un antioxydant, (iii) un auxiliaire de traitement de rotomoulage, et (iv) un lubrifiant/agent de démoulage,
dans laquelle la composition polymère a un débit massique à l'état fondu de 3,0 à 9,0 g/10 min à 275 °C avec 2,16 kg, tel que déterminé conformément à la norme ISO 1133, et dans laquelle la composition polymère a une teneur en humidité, mesurée conformément à la norme ISO 15512, égale ou inférieure à 0,20 % en poids.

2. La composition polymère selon la revendication 1, dans laquelle : (i) la composition polymère comprend au moins environ 70 % en poids de polyamide 6, par exemple, de 70 % en poids à 99,5 % en poids de polyamide 6 ; ou (ii) la composition polymère comprend d'environ 75 % en poids à environ 85 % en poids de polyamide 6 et/ou d'environ 15 % en poids à environ 25 % en poids de polyéther block amide.

3. La composition polymère selon l'une quelconque des revendications précédentes, dans laquelle la composition polymère a une teneur en humidité égale ou inférieure à 0,10 %.

4. La composition polymère selon l'une quelconque des revendications 1 à 3, dans laquelle la composition polymère comprend de 0,50 % en poids à 2,0 % en poids de l'ensemble d'additifs, ou de 0,50 % en poids à 1,0 % en poids de l'ensemble d'additifs.

5. La composition polymère selon l'une quelconque des revendications précédentes, dans laquelle le polyamide 6 a un débit volumique à l'état fondu de 100 à 150 cm³/10 min avec 5,0 kg à 275 °C conformément à la norme ISO 1133, une température de fusion de 200 à 250 °C telle que déterminée conformément à la norme ISO 11357-1/-3 (10 °C/min), et une densité de 1000 à 1250 kg/m³ telle que déterminée conformément à la norme ISO 1183.

6. La composition polymère selon l'une quelconque des revendications précédentes, dans laquelle le polyéther bloc amide a une température de fusion de 140 °C à 180 °C telle que déterminée conformément à la norme ISO 11357-1/- 3 (10 °C/min), et une densité de 950 à 1050 kg/m³ telle que déterminée conformément à la norme ISO 1183.

7. La composition polymère selon l'une quelconque des revendications précédentes, dans laquelle l'ensemble d'additifs comprend, consiste essentiellement en, ou consiste en, sur la base du poids total de la composition polymère : de 0,1 % en poids à 1,0 % en poids d'antioxydant, de 0,01 % en poids à 0,25 % en poids de photostabilisant, de stabilisant thermique et/ou UV, de 0,01 % en poids à 0,25 % en poids d'un auxiliaire de traitement de rotomoulage, et jusqu'à 0,1 % en poids de lubrifiant/agent de démoulage.

8. La composition polymère selon l'une quelconque des revendications précédentes, dans laquelle : (i) l'antioxydant comprend ou est un phénol à encombrement stérique, éventuellement en combinaison avec un phosphite d'hydrocarbyle ; et/ou (ii) le photostabilisant, le stabilisant thermique et/ou UV comprend ou est un photostabilisant à amine encombrée, par exemple, un photostabilisant à amine monomère, tel que N,N'-bis(2,2,6,6-tétraméthyl-4pipéridyl)-N,N'-diformylhexaméthylènediamine ; et/ou (iii) l'auxiliaire de traitement de rotomoulage comprend ou est un dioxyde de silicium traité en surface, éventuellement dans lequel le traitement de surface comprend un copolymère avec des groupes acides ; et/ou (iv) le lubrifiant/agent de démoulage comprend ou est un stéarate, par exemple, le stéarate de zinc.

9. La composition polymère selon l'une quelconque des revendications précédentes, dans laquelle la composition polymère comprend en outre du noir de carbone, par exemple, un noir de carbone à base de polyéthylène.

10. La composition polymère selon l'une quelconque des revendications précédentes, dans laquelle : (i) la composition polymère est sous forme de granulés ; ou (ii) la composition polymère est sous forme de poudre, éventuellement dans laquelle la poudre a une granulométrie moyenne, dso, de 100 pm à 700 pm.

11. Un procédé de production d'une composition polymère pour le rotomoulage selon l'une quelconque des revendications 1 à 10 comprenant le mélange de polyamide 6, de polyéther bloc amide et de l'ensemble d'additifs en quantités appropriées.

12. Le procédé selon la revendication 11, comprenant en outre la communition cryogénique de la composition polymère, par exemple, dans une machine de pulvérisation pour obtenir une poudre ayant une teneur en humidité égale ou inférieure à 0,20 %, éventuellement, inférieure à 0,15 %, ou égale ou inférieure à 0,10 %, en outre éventuellement dans lequel la poudre après communition a une granulométrie moyenne, dso, de 100 à 700 pm.

13. Un procédé de fabrication d'un article, le procédé comprenant le rotomoulage d'une composition polymère selon l'une quelconque des revendications 1 à 10, dans lequel l'atmosphère dans le moule pendant le rotomoulage est l'atmosphère ambiante ou le procédé est conduit en l'absence d'une atmosphère inerte.

14. Le procédé selon la revendication 13, comprenant au moins les étapes suivantes :
(a) charger un moule avec au moins la composition polymère selon l'une quelconque des revendications 1 à 10
(b) chauffer le moule chargé de la composition polymère tout en faisant tourner le moule, par exemple, biaxialement sur des axes perpendiculaires
(c) refroidir le moule et/ou l'article obtenu, et
(d) démouler l'article.

15. Une composition de mélange de polymères comprenant la composition polymère selon l'une quelconque des revendications 1 à 10 et un polymère différent.
